(19) 

Europäisches
Patentamt
European
Patent Office
Office européen
des brevets

(11) **EP 4 459 541 A1**

(12) **EUROPEAN PATENT APPLICATION**
published in accordance with Art. 153(4) EPC

(43) Date of publication:
**06.11.2024 Bulletin 2024/45**

(21) Application number: **22915000.8**

(22) Date of filing: **29.12.2022**

(51) International Patent Classification (IPC):
**G06T 5/00** (2024.01)

(52) Cooperative Patent Classification (CPC):
**G06T 5/70; G06N 3/0464; G06N 3/08; G06T 5/60;
G06V 10/147; G06V 10/30; G06V 10/764;
G06V 10/82;** G06T 2207/20021; G06T 2207/20081;
G06T 2207/20084

(86) International application number:
**PCT/CN2022/143154**

(87) International publication number:
**WO 2023/125750 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111672183**

(71) Applicant: **ARCSOFT CORPORATION LIMITED
Zhejiang 310052 (CN)**

(72) Inventors:
• **BIAN, Qiaoling
Hangzhou, Zhejiang 310052 (CN)**
• **CHEN, Binbin
Hangzhou, Zhejiang 310052 (CN)**
• **HUANG, Lu
Hangzhou, Zhejiang 310052 (CN)**
• **LU, Yanqing
Hangzhou, Zhejiang 310052 (CN)**
• **WANG, Jin
Hangzhou, Zhejiang 310052 (CN)**

(74) Representative: **Osha BWB
2, rue de la Paix
75002 Paris (FR)**

(54) **IMAGE DENOISING METHOD AND APPARATUS, AND STORAGE MEDIUM**

(57)    Disclosed are an image denoising method and apparatus, and a storage medium. The method includes: obtaining a to-be-denoised image sequence; inputting the to-be-denoised image sequence into a trained neural network, and completing denoising by the trained neural network; and obtaining a denoised image sequence according to an image sequence outputted by the trained neural network.

FIG. 1

EP 4 459 541 A1

## Description

The present application claims the priority of Chinese Patent Application No. 202111672183.8 filed on December 31, 2021, which is incorporated herein by reference in its entirety as a part of the present application.

TECHNICAL FIELD

The present application relates to image processing technology, and in particular to an image denoising method and apparatus, and a storage medium.

BACKGROUND

Images will be mixed with noise during the generation process, and images captured in dim light will have more noise than those captured in bright light. Noise brings loss of image quality such as image blur, image distortion, etc.

SUMMARY

The present application provides an image denoising method and apparatus, and a storage medium, which can remove noise contained in an image and improve image quality.

The image denoising method provided by the present application includes:

    acquiring a to-be-denoised image sequence;

    inputting the to-be-denoised image sequence into a trained neural network, and completing denoising by the trained neural network; and

    obtaining a denoised image sequence according to an image sequence output by the trained neural network.

As an exemplary embodiment, the method further includes:

    training a neural network before inputting the to-be-denoised image sequence into the trained neural network;

    where training a neural network includes:

    constructing an adaptive training dataset by acquired sample data;

    inputting the adaptive training dataset into a to-be-trained neural network; and

    adjusting parameters of the to-be-trained neural network by calculating a preset loss target until the to-be-trained neural network meets a preset convergence condition.

As an exemplary embodiment, constructing an adaptive training dataset by acquired sample data includes:

    acquiring a plurality of pieces of sample data respectively, where each piece of sample data includes a noisy image sequence sample and a reference image matching the noisy image sequence sample and having noise smaller than a preset threshold; and

    combining the plurality of pieces of sample data in proportion to construct the adaptive training dataset.

As an exemplary embodiment, a loss function used in calculating the preset loss target includes one or more of:
an L1 loss function, an L2 loss function, a structural similarity loss function, a perceptual loss function, and a frequency loss function.

As an exemplary embodiment, a way of acquiring each piece of sample data includes:

    taking an image of a target object captured by an external device as the noisy image sequence sample; and

    taking an image obtained by obtaining a preset number of noisy image sequence samples and superimposing the preset number of noisy image sequence samples as the reference image matching the noisy image sequence sample and having noise smaller than the preset threshold.

As an exemplary embodiment, a way of superimposing the preset number of noisy image sequence samples includes:
superimposing the preset number of noisy image sequence samples by pixel weighting, where weights corresponding to pixels constituting a moving object in the noisy image sequence sample are smaller than weights corresponding to pixels constituting a non-moving object.

As an exemplary embodiment, a way of acquiring each piece of sample data includes:

    taking an image of a target obj ect captured by an external device having an exposure time smaller than a preset time threshold as the noisy image sequence sample; and

    taking an image of the same target object captured by an external device having an exposure time larger than the preset time threshold as the reference image matching the noisy image sequence sample and having noise smaller than the preset threshold.

As an exemplary embodiment, a way of acquiring each piece of sample data includes:

taking an image of a target object captured by an external device having a lens with a filter as the noisy image sequence sample; and

taking an image of the same target object captured by an external device have a lens without a filter as the reference image matching the noisy image sequence sample and having noise smaller than the preset threshold.

As an exemplary embodiment, a way of acquiring each piece of sample data includes:

taking an image of a target object captured by an external device and having noise smaller than the preset threshold as the reference image matching the noisy image sequence sample and having noise smaller than the preset threshold; and

adding acquired preset noise to the reference image to obtain the noisy image sequence sample.

As an exemplary embodiment, a way of acquiring the preset noise includes:

acquiring the preset noise by simulation according to a noise distribution model; where undetermined parameters of the noise distribution model are acquired according to different ISO values of the reference image, pixel variance values of the reference image corresponding to the different ISO values, and a relationship between the ISO values and the pixel variance values calibrated by the noise distribution model.

As an exemplary embodiment, inputting the to-be-denoised image sequence into the trained neural network includes:

performing block segmentation on the to-be-denoised image sequence and inputting image blocks into the trained neural network;

obtaining a denoised image sequence according to an image sequence outputted by the trained neural network includes:

taking an image sequence obtained by fusing image blocks output from the trained neural network as the denoised image sequence.

As an exemplary embodiment, performing block segmentation on the to-be-denoised image sequence includes:

sequentially segmenting the to-be-denoised image sequence into blocks according to position coordinates, an overlapping area being present between adjacent image blocks;

fusing image blocks outputted from the trained neural network includes:

sequentially fusing an image block and an adjacent image block having an overlapping area therewith according to the position coordinates.

As an exemplary embodiment, the method further includes:
after performing the block segmentation on the to-be-denoised image sequence and inputting the image blocks into the trained neural network, allocating, according to performance of different hardware resources, the image blocks to the different hardware resources such that the different hardware resources process the respective allocated image blocks concurrently.

As an exemplary embodiment, inputting the adaptive training dataset into a to-be-trained neural network includes:

classifying the adaptive training dataset according to ISO values; and

inputting the adaptive training dataset in different categories into the to-be-trained neural network.

As an exemplary embodiment, the method further includes:

before inputting the to-be-denoised image sequence into the trained neural network, normalizing the to-be-denoised image sequence;

obtaining a denoised image sequence according to an image sequence outputted by the trained neural network includes:

performing inverse normalization on the image sequence output from the trained neural network to obtain the denoised image sequence.

Embodiments of the present application also provide an image denoising apparatus, including:

an acquisition unit configured to acquire a to-be-denoised image sequence;

a denoising unit configured to input the to-be-denoised image sequence into a trained neural network and complete denoising by the trained neural network; and

an output unit configured to obtain a denoised image sequence according to an image sequence output by the trained neural network.

Embodiments of the present application also provide a computer-readable storage medium storing one or more programs executable by one or more processors to implement the method according to any of the descriptions above.

Embodiments of the present application also provide an image denoising apparatus, including: a memory and a processor. The memory stores a program that, when read and executed by the processor, implements the method according to any of the descriptions above.

According to the embodiments of the present application, the noise in the image is removed by using the neural network, and the image quality is improved.

Other features and advantages of the present application will be set forth in the following specification, and in part will be apparent from the specification or will be learned implementing the present application. Other advantages of the present application can be realized and obtained from the solutions described in the specification and the accompanying drawings.

BRIEF DESCRIPTION OF DRAWINGS

The accompanying drawings are intended to provide a further understanding of the technical solutions of the present application and constitute a part of the specification. They are used to explain the technical solutions of the present application together with the embodiments of the present application but are not intended to limit the technical solutions of the present application.

FIG. 1 is a flowchart of an image denoising method according to an embodiment of the present application;

FIG. 2 is a flowchart of a method of training a neural network according to an embodiment of the present application;

FIG. 3 is a noise model curve graph according to an embodiment of the present application;

FIG. 4A is a schematic diagram of block segmentation and fusion of a to-be-denoised image sequence according to an embodiment of the present application;

FIG. 4B is a schematic diagram of an image block obtained by performing block segmentation on the to-be-denoised image sequence according to an embodiment of the present application;

FIG. 5 is a block diagram of an image denoising apparatus according to an embodiment of the present application; and

FIG. 6 is a block diagram of another image denoising apparatus according to an embodiment of the present application.

DETAILED DESCRIPTION

The present application describes a plurality of embodiments, but this description is exemplary and not limiting, and it is apparent to those of ordinary skill in the art that there may be more embodiments and implementations within the scope of the embodiments described in the present application. Although many possible combinations of features are shown in the accompanying drawings and discussed in the detailed description, many other combinations of the disclosed features are also possible. Unless specifically limited, any features or elements of any embodiment may be used in combination with or instead of any other features or elements of any other embodiment.

The present application includes and contemplates combinations with features and elements known to those of ordinary skill in the art. The embodiments, features and elements disclosed in the present application can also be combined with any conventional features or elements to form a distinctive inventive solution defined by the claims. Any features or elements of any embodiment can also be combined with features or elements from other inventive solutions to form another distinctive inventive solution defined by the claims. Therefore, it should be understood that any features shown and/or discussed in the present application can be implemented individually or in any suitable combination. As a result, the embodiments are not otherwise limited except in accordance with the appended claims and their equivalent substitutions. In addition, various modifications and changes can be made within the scope of protection of the appended claims.

Furthermore, in describing representative embodiments, the specification may have presented the method and/or process as a specific sequence of steps. However, to the extent that the method or process does not depend on the specific sequence of steps described herein, the method or process should not be limited to the specific sequence of steps described. Other sequences of steps are possible, as will be appreciated by those of ordinary skill in the art. Therefore, the specific sequence of steps set forth in the specification should not be construed as limiting the claims. Furthermore, the claims directed to the method and/or process should not be limited to executing their steps in the written sequence, and those skilled in the art can easily understand that these orders can be changed and still remain within the spirit and scope of the embodiments of the present application.

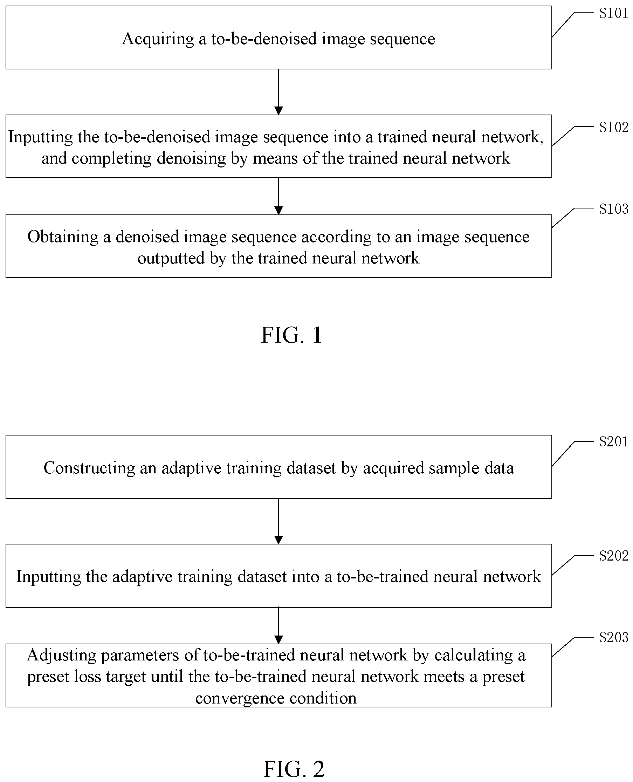

Embodiments of the present application provide an image denoising method. As shown in FIG. 1, the method includes:

Step S101: Acquiring a to-be-denoised image sequence.

Step S102: Inputting the to-be-denoised image sequence into a trained neural network and completing denoising by the trained neural network.

The to-be-denoised image sequence inputted into the trained neural network may be single frames, single frames after superimposition of multiple frames, or multiple consecutive frames. The data format thereof may be various, such as RGB, YUV, or RawRGB. Furthermore, in a case where multiple consecutive frames are inputted into the neural network, it is required to keep adjacent frames aligned. Embodiments of the present application support denoising of images in a variety of formats and can meet the requirements of different end users.

Step S103: Obtaining a denoised image sequence according to an image sequence output by the trained neural network.

The image sequence output from the trained neural network is single frames. The data format thereof may also be various, such as RGB, YUV, or RawRGB. If the format of the to-be-denoised image sequence inputted into the trained neural network is different that of the desired image sequence outputted from the trained neural network, format conversion is required.

According to the embodiments of the present application, the noise in the image is removed by using the neural network, and the image quality is improved.

In an exemplary embodiment, the method further includes: training a neural network before inputting the to-be-denoised image sequence into the trained neural network.

In an exemplary embodiment, as shown in FIG. 2, the steps of training the neural network include:
Step S201: Constructing an adaptive training dataset by acquired sample data.

Constructing an adaptive training dataset by the acquired sample data includes:
acquiring a plurality of pieces of sample data respectively, where each piece of sample data includes a noisy image sequence sample and a reference image matching the noisy image sequence sample and having noise smaller than a preset threshold; and combining the plurality of pieces of sample data in proportion to construct the adaptive training dataset. The proportion of the plurality of pieces of sample data may be set and may be adjusted according to the type of the to-be-denoised image sequence and the difficulty of sample data acquisition.

The reference image may be used for calculating a loss function value so as to determine whether the to-be-trained neural network meets a preset convergence condition. The "matching" in the reference image matching the noisy image sequence sample and having noise smaller than the preset threshold means that the reference image matches the noisy image sequence sample in pixels, *i.e.*, any frame of the noisy image sequence sample and the reference image are aligned at the pixel level and are different only in image quality.

Step S202: Inputting the adaptive training dataset into a to-be-trained neural network.

The types of neural networks include, but are not limited to, an RNN network, a fully convolutional network, and a Unet network.

Step S203: Adjusting parameters of to-be-trained neural network by calculating a preset loss target until the to-be-trained neural network meets a preset convergence condition. For example, by adjusting the parameters of the to-be-trained neural network, the calculated loss function value becomes smaller and smaller until it reaches the preset loss function value target, thereby completing the convergence of the neural network.

In this embodiment of the present application, a loss function used in calculating the loss function value includes one or more of:
an L1 loss function, an L2 loss function, a structural similarity loss function, a perceptual loss function, and a frequency loss function.

After finishing training the neural network, the network parameters can be frozen such that the network parameters are fixed. The network parameters may run on floating-point hardware resources, including but not limited to a CPU, a Graphic Processing Unit (GPU), and a DSP. On a hardware acceleration platform (including but not limited to a quantization platform), quantization training and post-quantization can be performed to make the network parameters integer, and 8-bit quantization or 16-bit quantization of parameters and weights can be performed according to different input data requirements.

In order to ensure the optimal forward performance, when a GPU and an NPU run the network forward at the same time, it is required to ensure the consistency of results of the GPU and the NPU. If the post-quantization strategy is used, then the consistency of the results of the GPU and the NPU is ensured by accuracy of post-quantization. In the case of training quantization, one more item may be added to the loss function: a supervised loss function of the results of the GPU model and the NPU model, which may be L1, L2, or the like.

In an exemplary embodiment, a way of acquiring each piece of sample data includes:
First way: taking an image of a target object captured by an external device as the noisy image sequence sample; and taking an image obtained by obtaining a preset number of noisy image sequence samples and superimposing the preset number of noisy image sequence samples as the reference image matching the noisy image sequence sample and having noise smaller than the preset threshold.

Because of the randomness of noise, superimposing the preset number of noisy image sequence samples can significantly reduce the noise, increase the signal to noise ratio, and improve the details. As a result, the superimposed image can be used as the reference image. The preset number may be determined according to the noise of each noisy image sequence sample. If the noise is small (smaller than a preset noise threshold), the preset number may be 6-10. If the noise is large (larger than the preset noise threshold), the preset number may be 60-100.

A way of superimposing the preset number of noisy image sequence samples includes:

superimposing the preset number of noisy image sequence samples by pixel weighting, where weights corresponding to pixels constituting a moving object in the noisy image sequence sample are smaller than weights corresponding to pixels constituting a non-moving object. By reducing the weights corresponding to the pixels of the moving object, image contamination caused by camera shake or moving objects can be reduced while keeping image details, which reduces the possibility of introducing ghosts into the superimposed image, thereby improving the training effect of the neural network.

The first way has the advantage that it is applicable to a variety of scenarios and does not have special requirements for acquisition tools, and has the disadvantages of high acquisition cost and high requirements for the acquisition environment (it is required to ensure a constant brightness and no shake during the acquisition process).

Second way: taking an image of a target object captured by an external device having an exposure time smaller than a preset time threshold as the noisy image sequence sample; and taking an image of the same target object captured by an external device having an exposure time larger than the preset time threshold as the reference image matching the noisy image sequence sample and having noise smaller than the preset threshold.

Generally, the shorter the exposure time, the larger the noise; and the longer the exposure time, the smaller the noise.

Optionally, the exposure time may be determined according to gain value* exposure time=EV0 (EV0 refers to the combination of exposure amount corresponding to an exposure time of 1 second and an aperture of f/1.0 or its equivalent combination). The smaller the gain value is set, the longer the exposure time is obtained and the smaller the noise is, because EV0 is fixed. Conversely, the larger the gain value is set, the shorter the exposure time is obtained and the larger the noise is, because EV0 is fixed.

The second way has the advantage that its GT quality is better than that of the first way and has the disadvantage of high requirements for the acquisition environment (it is required to ensure a constant brightness and no shake during the acquisition process).

Third way: taking an image of a target object captured by an external device having a lens with a filter as the noisy image sequence sample; and taking an image of the same target object captured by an external device having a lens without a filter as the reference image matching the noisy image sequence sample and having noise smaller than the preset threshold.

Since a lens with a filter can simulate a dim light environment, the image of the target object captured by the external device having a lens with a filter may be used as the noisy image sequence sample. Accordingly, the image of the same target object captured by the external device having a lens without a filter may be used as the reference image.

The third way has the advantage that it can acquire an extremely dim scene and has the disadvantage of the presence of glare effect.

Fourth way: taking an image of a target object with noise smaller than a preset threshold captured by an external device as the reference image; adding acquired preset noise to the reference image to obtain the noisy image sequence sample.

A way of acquiring the preset noise may include:

acquiring the preset noise by simulation according to a noise distribution model;

where undetermined parameters of the noise distribution model are obtained according to different ISO values of the reference image, pixel variance values of the reference image corresponding to the different ISO values, and a relationship between the ISO values and the pixel variance values calibrated by the noise distribution model.

Specifically, the preset noise distribution model meets a Poisson-Gaussian distribution model:

$$g\text{Poison}\left(I/g\right) + \text{Normal}\left(0, \delta_{add}^2\right)$$

where *Poison*( ) represents a Poisson function, *Normal*( ) represents a normal distribution function, and I represents the ISO value of the reference image.

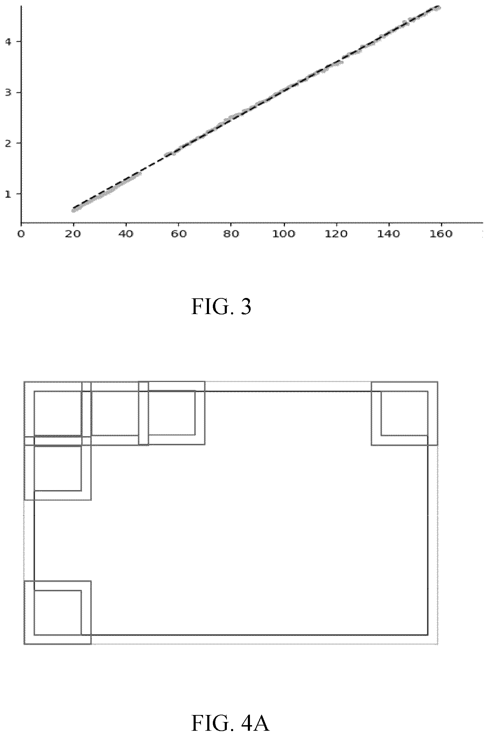

g and $\delta_{add}^2$ are obtained according to different ISO values of the reference image, pixel variance values of the reference image corresponding to the different ISO values, and the noise distribution model $\delta\left(I\right)^2 = g * I + \delta_{add}^2$. $\delta(I)^2$ represents the pixel variance value of the reference image corresponding to the ISO value I. FIG. 3 shows a curve graph corresponding to I~$\delta(I)^2$, where the abscissa represents the ISO value I, the ordinate represents $\delta(I)^2$, the slope of the curve is g, and the intercept is $\delta_{add}^2$.

The fourth way has the advantages of fast generation of data, low cost, and better GT, and has the disadvantage that it is only suitable for data directly output from a specific sensor.

Based on the above, it can be seen that the four different ways of acquiring sample data have their respective advantages and disadvantages, and the data acquisition processes may be combined according to needs to obtain the adaptive training dataset. For example, in raw domain denoising, for the highest ISO value, data may be obtained by the third way; for the lowest ISO value, data may be obtained by the fourth way; for intermediate ISO values, data may be obtained by the second way; and additional data may be obtained by the first way. Datasets obtained by a variety of ways constitute the complete adaptive training dataset.

In an exemplary embodiment, inputting the to-be-denoised image sequence into the trained neural network includes:

performing block segmentation on the to-be-denoised image sequence and inputting image blocks into the trained neural network.

Obtaining the denoised image sequence according to the image sequence outputted by the trained neural network includes:

taking an image sequence obtained by fusing image blocks output from the trained neural network as the denoised image sequence.

When the to-be-denoised image sequence is large and the neural network has limited computing power, the image sequence may be segmented and then inputted into the neural network. Similarly, when training the neural network, the to-be-denoised image sequence sample may be segmented into blocks and then input into the to-be-trained neural network.

In an exemplary embodiment, performing block segmentation on the to-be-denoised image sequence includes:

sequentially segmenting the to-be-denoised image sequence into blocks according to position coordinates, an overlapping area being present between adjacent image blocks.

Fusing the image blocks outputted from the trained neural network includes:

sequentially fusing an image block and an adjacent image block having an overlapping area therewith according to the position coordinates.

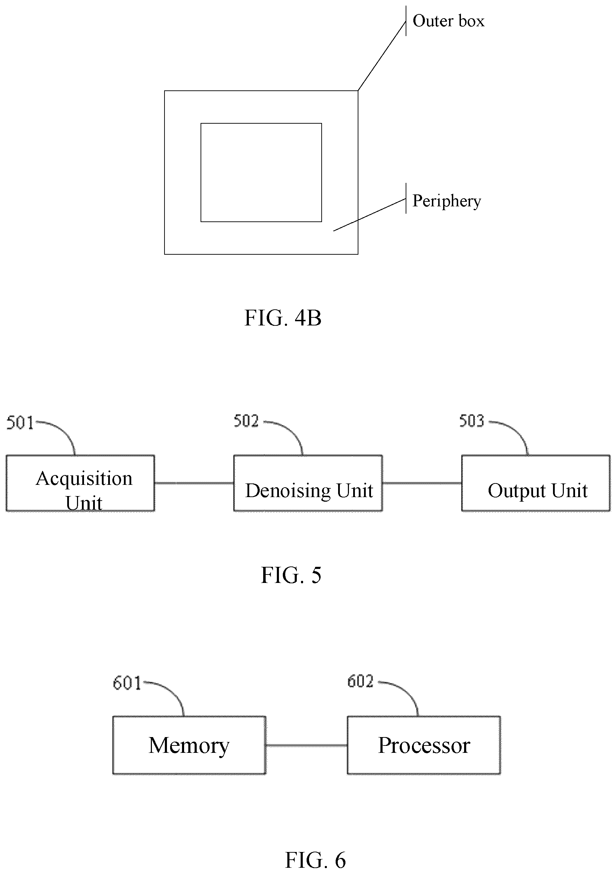

FIG. 4A is a schematic diagram of block segmentation and fusion of a to-be-denoised image sequence according to an embodiment of the present application. An image block obtained by performing block segmentation on the to-be-denoised image sequence is shown in FIG. 4B. The image block in the outer box in FIG. 4B is the image block input into the neural network, and the portion between the inner box and the outer box is the periphery. During the fusion of the image block, the peripheries of adjacent image blocks overlap.

During the block segmentation of the to-be-denoised image sequence, each image block obtained can be identified. For example, the coordinates of the center position of each image block are used as identification. During the fusion of the image blocks, the fusion is performed according to the identification.

By arranging the overlapping area between the adjacent image blocks, obvious dividing lines can be avoided after the fusion of the adjacent image blocks.

In an exemplary embodiment, the method further includes:

after performing the block segmentation on the to-be-denoised image sequence and inputting the image blocks into the trained neural network, allocating, according to performance of different hardware resources, the image blocks to the different hardware resources such that the different hardware resources process the respective allocated image blocks concurrently. Types of the hardware resources may include a GPU, an NPU and, a CPU. For example, in order to ensure the optimal forward performance, a GPU and an NPU may be used as hardware to run concurrently, and the numbers of image blocks allocated to the GPU and the NPU may be determined according to the performance ratio of the GPU to the NPU. For example, if the total number of image blocks is 200 and the performance ratio of the GPU to the NPU is 1:2, then 66 of the image blocks may be allocated to the GPU, and the remaining image blocks may be allocated to the NPU.

In an exemplary embodiment, the method further includes:

before inputting the to-be-denoised image sequence into the trained neural network, normalizing the to-be-denoised image sequence.

Obtaining the denoised image sequence according to the image sequence outputted by the trained neural network includes:

performing inverse normalization on the image sequence output from the trained neural network to obtain the denoised image sequence.

The normalization is performed to standardize the data and eliminate the influence of different dimensions, so that the data are in the same order of magnitude, thereby ensuring the accuracy of the results outputted by the neural network. Similarly, when training the neural network, the to-be-denoised image sequence sample may be normalized and then input into the to-be-trained neural network.

In an exemplary embodiment, inputting the adaptive training dataset into the to-be-trained neural network includes:

classifying the adaptive training dataset according to ISO values; and

inputting the adaptive training dataset in different categories into the to-be-trained neural network.

By this embodiment, one trained neural network may be obtained for each category of ISO values, and multiple categories of ISO values correspond to multiple trained neural networks. Alternatively, multiple categories of ISO values correspond to one trained neural network, and each category of ISO values corresponds to one channel of the trained neural network. The larger the ISO value, the more the noise, and the stronger the denoising ability of the corresponding trained neural network or channel of the neural network. Similarly, the smaller the ISO value, the less the noise, and the stronger the denoising ability of the corresponding trained neural network or channel of the neural network.

Optionally, classifying the adaptive training dataset according to the ISO values includes:

classifying the noisy image sequence samples and the reference images sequentially according to an ISO value of 100-1600, an ISO value of 1600-3200, an ISO value of 3200-6400, and an ISO value of 6400-12800. The finer the classification, the higher the accuracy, but the higher the maintenance cost for denoising. In this embodiment of the present application, the ISO values are classified into the above 4 categories, which can control the maintenance cost while ensuring high accuracy.

Embodiments of the present application also provide an image denoising apparatus. As shown in FIG. 5, the apparatus includes:

an acquisition unit 501 configured to acquire a to-be-denoised image sequence;

a denoising unit 502 configured to input the to-be-denoised image sequence into a trained neural network and complete denoising by the trained neural network;

where the to-be-denoised image sequence inputted into the trained neural network may be single frames, single frames after superimposition of multiple frames, or multiple consecutive frames; the data format thereof may be various, such as RGB, YUV, or RawRGB; the embodiment of the present application supports denoising of images in a variety of formats, and can meet the requirements of different end users; and

an output unit 503 configured to obtain a denoised image sequence according to an image sequence output by the trained neural network.

The image sequence output from the trained neural network is single frames. The data format thereof may also be various, such as RGB, YUV, or RawRGB. If the format of the to-be-denoised image sequence inputted into the trained neural network is different that of the desired image sequence outputted from the trained neural network, format conversion is required.

According to the embodiments of the present application, the noise in the image is removed by using the neural network, and the image quality is improved.

Embodiments of the present application also provide a computer-readable storage medium storing one or more programs executable by one or more processors to implement the method according to any of the embodiments above.

An embodiment of the present application further provides an image denoising apparatus, as shown in FIG. 6, including: a memory 601 and a processor 602. The memory 601 stores a program that, when read and executed by the processor 602, implements the image denoising method according to any of the embodiments above.

Those skilled in the art can understand that all or some of the steps in the methods and the functional modules/units in the systems and apparatuses disclosed above can be implemented as software, firmware, hardware, and an appropriate combination thereof. In the hardware implementation, the division between the functional modules/units mentioned in the above description does not necessarily correspond to the division of physical components. For example, one physical component may have multiple functions, or one function or step may be executed by several physical components in cooperation. Some or all of the components may be implemented as software executed by a processor, such as a digital signal processor or a microprocessor, or as hardware, or as an integrated circuit, such as an application specific integrated circuit. Such software may be distributed on a computer-readable medium, which may include a computer storage medium (or a non-transitory medium) and a communication medium (or a transitory medium). As is well known to those of ordinary skill in the art, the term computer storage medium includes volatile and nonvolatile, removable and non-removable media implemented in any method or technology for storing information, such as computer-readable instructions, data structures, program modules, or other data. The computer storage medium includes, but is not limited to, a RAM, a ROM, an EEPROM, a flash memory or other memory technologies, a CD-ROM, a digital versatile disk (DVD) or other optical disk memories, a cassette, a magnetic tape, a magnetic disk storage or other magnetic storage apparatuses, or any other media that can be used to store desired information and can be accessed by a computer. Furthermore, it is well known to those of ordinary skill in the art that a communication medium usually contains computer-readable instructions, data structures, program modules, or other data in a modulated data signal such as a carrier wave or other transmission mechanisms and may include any information delivery medium.

**Claims**

1. An image denoising method, comprising:

acquiring a to-be-denoised image sequence;
inputting the to-be-denoised image sequence into a trained neural network, and completing denoising by the trained neural network; and obtaining a denoised image sequence according to an image sequence output by the trained neural network.

2. The method according to claim 1, wherein the method further comprises:

training a neural network before inputting the to-be-denoised image sequence into the trained neural network,
wherein training a neural network comprises:

constructing an adaptive training dataset by acquired sample data;
inputting the adaptive training dataset into a to-be-trained neural network; and
adjusting parameters of the to-be-trained neural network by calculating a preset loss target until the to-be-trained neural network meets a preset convergence condition.

3. The method according to claim 3, wherein constructing an adaptive training dataset by the obtained sample data comprises:

obtaining a plurality of pieces of sample data respectively, wherein each piece of sample data comprises a noisy image sequence sample and a reference image matching the noisy image sequence sample and having noise smaller than a preset threshold; and
combining the plurality of pieces of sample data in proportion to construct the adaptive training dataset.

4. The method according to claim 2, wherein a loss function used in calculating the preset loss target comprises one or more of:
an L1 loss function, an L2 loss function, a structural similarity loss function, a perceptual loss function, and a frequency loss function.

5. The method according to claim 3, wherein obtaining each piece of sample data comprises:

taking an image of a target object captured by an external device as the noisy image sequence sample; and
taking an image obtained by obtaining a preset number of noisy image sequence samples and superimposing the preset number of noisy image sequence samples as the reference image matching the noisy image sequence sample and having noise smaller than the preset threshold.

6. The method according to claim 5, wherein superimposing the preset number of noisy image sequence samples comprises:
superimposing the preset number of noisy image sequence samples by pixel weighting, wherein weights corresponding to pixels constituting a moving object in the noisy image sequence sample are smaller than weights corresponding to pixels constituting a non-moving object.

7. The method according to claim 3, wherein obtaining each piece of sample data comprises:

taking an image of a target object captured by an external device having an exposure time smaller than a preset time threshold as the noisy image sequence sample; and
taking an image of the same target object captured by an external device having an exposure time larger than the preset time threshold as the reference image matching the noisy image sequence sample and having noise smaller than the preset threshold.

8. The method according to claim 3, wherein obtaining each piece of sample data comprises:

taking an image of a target object captured by an external device having a lens with a filter as the noisy image sequence sample; and
taking an image of the same target object captured by an external device having a lens without a filter as the reference image matching the noisy image sequence sample and having noise smaller than the preset threshold.

9. The method according to claim 3, wherein obtaining each piece of sample data comprises:

taking an image of a target object captured by an external device and having noise smaller than a preset threshold as the reference image matching the noisy image sequence sample and having noise smaller than the preset threshold; and
adding acquired preset noise to the reference image to obtain the noisy image sequence sample.

10. The method according to claim 9, wherein acquiring the preset noise comprises:

acquiring the preset noise by simulation according to a noise distribution model;
wherein undetermined parameters of the noise distribution model are obtained according to different ISO values of the reference image, pixel variance values of the reference image corresponding to the different ISO values, and a relationship between the ISO values and the pixel variance values calibrated by the noise distribution model.

**11.** The method according to claim 1, wherein

inputting the to-be-denoised image sequence into a trained neural network comprises: performing block segmentation on the to-be-denoised image sequence and inputting image blocks into the trained neural network, and obtaining a denoised image sequence according to an image sequence outputted by the trained neural network comprises: taking an image sequence obtained by fusing the image blocks output from the trained neural network as the denoised image sequence.

**12.** The method according to claim 11, wherein

performing block segmentation on the to-be-denoised image sequence comprises: sequentially segmenting the to-be-denoised image sequence into blocks according to position coordinates, an overlapping area being present between adjacent image blocks, and fusing the image blocks outputted from the trained neural network comprises: sequentially fusing an image block and an adjacent image block having an overlapping area therewith according to the position coordinates.

**13.** The method according to claim 11, wherein the method further comprises:
after performing the block segmentation on the to-be-denoised image sequence and inputting the image blocks into the trained neural network, allocating, according to performance of different hardware resources, the image blocks to the different hardware resources such that the different hardware resources process the respective allocated image blocks concurrently.

**14.** The method according to claim 2, wherein inputting the adaptive training dataset into a to-be-trained neural network comprises:

classifying the adaptive training dataset according to ISO values; and
inputting the adaptive training dataset in different categories into the to-be-trained neural network.

**15.** The method according to claim 1, wherein

the method further comprises:
before inputting the to-be-denoised image sequence into the trained neural network, normalizing the to-be-denoised image sequence, and obtaining a denoised image sequence according to an image sequence outputted by the trained neural network comprises:
performing inverse normalization on the image sequence output from the trained neural network to obtain the denoised image sequence.

**16.** An image denoising apparatus, comprising:

an acquisition unit configured to acquire a to-be-denoised image sequence;
a denoising unit configured to input the to-be-denoised image sequence into a trained neural network and complete denoising by the trained neural network; and
an output unit configured to obtain a denoised image sequence according to an image sequence output by the trained neural network.

**17.** A computer-readable storage medium storing one or more programs executable by one or more processors to implement the method according to any of claims 1 to 15.

**18.** An image denoising apparatus, comprising: a memory and a processor, the memory storing a program that, when read and executed by the processor, implementing the method according to any of claims 1 to 15.

Acquiring a to-be-denoised image sequence ⎤ S101

Inputting the to-be-denoised image sequence into a trained neural network, and completing denoising by means of the trained neural network ⎤ S102

Obtaining a denoised image sequence according to an image sequence outputted by the trained neural network ⎤ S103

## FIG. 1

Constructing an adaptive training dataset by acquired sample data ⎤ S201

Inputting the adaptive training dataset into a to-be-trained neural network ⎤ S202

Adjusting parameters of to-be-trained neural network by calculating a preset loss target until the to-be-trained neural network meets a preset convergence condition ⎤ S203

## FIG. 2

FIG. 3

FIG. 4A

Outer box

Periphery

FIG. 4B

501

Acquisition Unit

502

Denoising Unit

503

Output Unit

FIG. 5

601

Memory

602

Processor

FIG. 6

## INTERNATIONAL SEARCH REPORT

International application No.

**PCT/CN2022/143154**

| A. | CLASSIFICATION OF SUBJECT MATTER |
|---|---|

G06T5/00(2006.01)i

According to International Patent Classification (IPC) or to both national classification and IPC

| B. | FIELDS SEARCHED |
|---|---|

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 图像, 图象, 去噪, 噪音, 神经网络, 训练, 损失, 模型, picture, image, denoise, noise, neural network, train, loss, model

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110782414 A (FUZHOU UNIVERSITY) 11 February 2020 (2020-02-11) description, paragraphs 25-39, and figures 1-8 | 1-18 |
| X | CN 108280811 A (HARBIN INSTITUTE OF TECHNOLOGY (SHENZHEN)) 13 July 2018 (2018-07-13) description, paragraphs 49-105, and figures 1-6 | 1-18 |
| A | CN 102693529 A (HANGZHOU DIANZI UNIVERSITY) 26 September 2012 (2012-09-26) entire document | 1-18 |
| A | US 2005232506 A1 (SMITH, R. Theodore et al.) 20 October 2005 (2005-10-20) entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 February 2023** | **16 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/143154**

| Patent document cited in search report | | | Publication date (day/month/year) | Patent family member(s) | | | Publication date (day/month/year) |
|---|---|---|---|---|---|---|---|
| CN | 110782414 | A | 11 February 2020 | None | | | |
| CN | 108280811 | A | 13 July 2018 | CN | 108280811 | B | 06 July 2021 |
| CN | 102693529 | A | 26 September 2012 | CN | 102693529 | B | 28 January 2015 |
| US | 2005232506 | A1 | 20 October 2005 | WO | 2005104013 | A2 | 03 November 2005 |
| | | | | WO | 2005104013 | A3 | 14 December 2006 |
| | | | | US | 7248736 | B2 | 24 July 2007 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111672183